# EUROPEAN PATENT APPLICATION

(11) **EP 4 227 366 A1**
(43) Date of publication of application: **16.08.2023**
(21) Application number: 21878921.2
(22) Date of filing: 24.03.2021
(51) Int. Cl.: C08L 77/06, C08L 77/02, C08L 23/08, C08K 13/04, C08K 13/02, C08K 7/14, C08K 3/38, C08K 3/34, C08K 5/5313, C08K 5/3492

(54) **LOW-MOLD DEPOSIT HALOGEN-FREE FLAME-RETARDANT THERMOPLASTIC POLYAMIDE COMPOSITION, AND PREPARATION METHOD THEREFOR AND APPLICATION THEREOF**

(30) Priority: 12.10.2020 CN 202011086083
(71) Applicant: Kingfa Sci. & Tech. Co., Ltd., Guangzhou, Guangdong 510663 (CN)
(72) Inventor: JIN, Xuefeng, Guangzhou, Guangdong 510663 (CN); HUANG, Xianbo, Guangzhou, Guangdong 510663 (CN); YE, Nanbiao, Guangzhou, Guangdong 510663 (CN); WANG, Feng, Guangzhou, Guangdong 510663 (CN); HU, Zeyu, Guangzhou, Guangdong 510663 (CN); YI, Xin, Guangzhou, Guangdong 510663 (CN); WU, Changbo, Guangzhou, Guangdong 510663 (CN); ZHENG, Yiquan, Guangzhou, Guangdong 510663 (CN)
(74) Representative: Meyer, Thorsten
(86) International application number: PCT/CN2021/082797
(87) International publication number: WO 2022/077865

(57) **Abstract**

Disclosed are a low-mold deposit halogen-free flame-retardant thermoplastic polyamide composition, and a preparation method and use thereof. The low-mold deposit halogen-free flame-retardant thermoplastic polyamide composition of the present disclosure includes the following components in parts by weight: 20 to 82 parts of a thermoplastic polyamide resin; 13 to 25 parts of a flame retardant; 1 to 5 parts of a flame-retardant synergist; 5 to 50 parts of a reinforcement material; and 0.5 to 5 parts of an adsorbent, where the flame retardant includes a phosphinate-based flame retardant and the adsorbent is an ethylene copolymer. In the low-mold deposit halogen-free flame-retardant thermoplastic polyamide composition of the present disclosure, an ethylene copolymer is added as an adsorbent and an addition amount of the ethylene copolymer is controlled, so that the prepared low-mold deposit halogen-free flame-retardant thermoplastic polyamide composition exhibits excellent flame resistance and electrical properties, and can effectively reduce the release of small molecules during the injection molding and greatly reduce an amount of the mold deposit generated during the injection molding.

## Description

### TECHNICAL FIELD

The present disclosure relates to the field of high polymer materials, and specifically relates to a low-mold deposit halogen-free flame-retardant thermoplastic polyamide composition, and a preparation method and use thereof.

### BACKGROUND

Polyamides are collectively known as nylon, and are characterized in repeated amide groups -[NHCO]- in their molecular backbones. Due to the polar amide groups in the molecular structure, a strong hydrogen bonding effect is formed among molecular chains, such that a polyamide has high crystallinity and superior mechanical performance. Polyamides are a class of basic resins with the largest output, the most varieties, the widest use, and excellent comprehensive performances among the five general engineering plastics.

As a general halogen-free flame retardant, diethylphosphinate has excellent flame resistance, can be added at a small amount, and exhibits little impact on the physical and electrical properties of a basic resin; and diethylphosphinate-based flame-retardant materials have been highly valued by the industry due to characteristics such as smaller smoke amount than halogen-based flame retardants during combustion and high comparative tracking index (CTI). In addition, diethylphosphinate-based flame-retardant polyamides have superior mechanical properties and electrical properties, so that they are increasingly favored by manufacturers in the electrical engineering and electrical appliance industries, and have very promising market use prospects.

Because diethylphosphinate has strong acidity and polyamide has many polar amide groups, the diethylphosphinate flame-retardant PA66 is easy to absorb water with a high water absorption rate, for example, the PA66 resin has a water absorption rate up to 2.7% at a temperature of 23°C and a humidity of 50%. In a process of extrusion or injection molding, a high temperature (some hot-runner molds used at a temperature higher than 300 °C) can easily promote the decomposition of a system, resulting in a high gas production. In a process of injection molding, a mold deposit often appears on a mold and affects the appearance of a product, and thus the mold needs to be cleaned frequently, which leads to low efficiency and makes it difficult to well promote and use the product.

At present, the problem that a mold deposit is generated during the injection molding of a diethylphosphinate flame-retardant polyamide material is solved mainly by adding an acid absorber to a system to reduce the acidity of the system. For example, European patent publication No. EP2417191A1 discloses that some acidic substances in a system are neutralized by adding calcium oxide to the system to reduce the acidity of the system and the decomposition of a matrix resin, thereby effectively reducing the corrosion to a mold during a high-temperature injection molding process. Although this method can reduce a mold deposit to some extent, calcium oxide is easy to absorb moisture and thus the system has a high water absorption rate, resulting in difficult control during processing.

In the above patent application, a mold deposit of diethylphosphinate-based flame-retardant polyamide can be improved to some extent, but it is difficult to control moisture during use, such that diethylphosphinate contacts water and the quality is unstable, which easily causes the increased acidity of the material and the deterioration of the mold deposit.

Therefore, it is urgent to develop a low-mold deposit halogen-free flame-retardant thermoplastic polyamide composition that can reduce the acidity and water absorption of a system, can reduce the generation of a mold deposit during preparation, and has excellent flame resistance and electrical properties.

### SUMMARY

A first obj ective of the present disclosure is to overcome the problem that the phosphinate halogen-free flame-retardant polyamide material in the prior art has strong acidity, is easy to cause corrosion to a mold, and triggers the decomposition of a system at a high temperature to produce small-molecule substances to cause a mold deposit, and to provide a low-mold deposit halogen-free flame-retardant thermoplastic polyamide composition. The low-mold deposit halogen-free flame-retardant thermoplastic polyamide composition has excellent flame resistance and electrical properties, and leads to a low mold deposit amount during production.

A second objective of the present disclosure is to provide a preparation method of the low-mold deposit halogen-free flame-retardant thermoplastic polyamide composition.

A third objective of the present disclosure is to provide use of the low-mold deposit halogen-free flame-retardant thermoplastic polyamide composition in preparation of a component for an electronic device, an electrical appliance, or an electrical engineering product.

To achieve the above objectives, the present disclosure adopts the following technical solutions:

A low-mold deposit halogen-free flame-retardant thermoplastic polyamide composition is provided, including the following components in parts by weight:

| | |
|---|---|
| thermoplastic polyamide resin | 20 to 82 parts; |
| flame retardant | 13 to 25 parts; |
| flame-retardant synergist | 1 to 5 parts; |
| reinforcement material | 5 to 50 parts; and |
| adsorbent | 0.5 to 5 parts, |

wherein, the flame retardant includes a phosphinate-based flame retardant, and does not include red phosphorus; and the adsorbent includes an ethylene copolymer obtained through copolymerization of the following components in parts by weight:

| | |
|---|---|
| ethylene | 48 to 85 parts; |
| (methyl)acrylate with 1 to 18 carbon atoms | 10 to 35 parts; and |
| functional monomer | 0.1 to 15 parts, |

wherein the functional monomer is one or a combination of two or more selected from the group consisting of an epoxide, an ethylenically unsaturated monocarboxylic acid, an ethylenically unsaturated monocarboxylic anhydride, an ethylenically unsaturated dicarboxylic acid, and an ethylenically unsaturated dicarboxylic anhydride.

In the prior art, the ethylene copolymer is typically mixed with a polyamide and used as a flexibilizer. The inventors of the present disclosure have creatively found that, when added to a phosphinate-containing halogen-free flame-retardant polyamide composition at a specified amount, the ethylene copolymer can reduce the generation of a mold deposit during the preparation of the composition and improve the injection molding efficiency without affecting the flame resistance and electrical properties of the material.

Further preferably, the low-mold deposit halogen-free flame-retardant thermoplastic polyamide composition includes the following components in parts by weight:

| | |
|---|---|
| thermoplastic polyamide resin | 50 to 75 parts; |
| flame retardant | 16 to 24 parts; |
| flame-retardant synergist | 1 to 5 parts; |
| reinforcement material | 10 to 35 parts; and |
| adsorbent | 2 to 4 parts. |

The thermoplastic polyamide resin of the present disclosure is obtained through condensation polymerization between a dicarboxylic acid and a diamine or through ring-opening polymerization of a lactam.

Preferably, the dicarboxylic acid is one or a combination of two or more selected from the group consisting of aliphatic dicarboxylic acids such as oxalic acid, succinic acid, adipic acid, azelaic acid, sebacic acid, dodecanoic acid, and octadecanoic acid; and aromatic dicarboxylic acids such as terephthalic acid, phthalic acid, and naphthalic acid.

Preferably, the diamine is one or a combination of two or more selected from the group consisting of ethylenediamine, butanediamine, hexanediamine, nonanediamine, decanediamine, undecylamine, dodecylamine, hexadecylamine, octadecylamine, p-phenylenediamine, m-phenylenediamine, o-phenylenediamine, and 4,4'-diaminodiphenylmethane.

Preferably, the lactam is one or a combination of two or more selected from the group consisting of butyrolactam, valerolactam, hexanolactam, enantholactam, octanolactam, nonanelactam, decanolactam, dodecalactam, hexadecanlactam, and octadecanlactam.

Preferably, the thermoplastic polyamide resin is one or a combination of two or more selected from the group consisting of nylon 6, nylon 66, nylon 46, nylon 6/66, nylon 610, nylon 611, nylon 612, nylon 6T, and nylon 9T.

Preferably, the phosphinate-based flame retardant is a phosphonate and has a structure shown as follows:

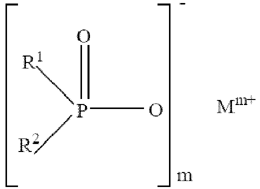

where R¹ and R² each are independently selected from the group consisting of linear or branched C₁-C₆ alkyl and/or aryl; M is one or a combination of two or more selected from the group consisting of an alkali metal, an alkaline-earth metal, Al, Zn, Fe, and Ti; and m is 1 to 4.

Further preferably, in the phosphinate-based flame retardant, R¹ and R² each are independently selected from the group consisting of methyl, ethyl, n-propyl, isopropyl, n-butyl, tert-butyl, n-pentyl, and phenyl; and M is selected from the group consisting of Al and Zn.

Preferably, the phosphinate-based flame retardant further includes a melamine derivative.

Preferably, the melamine derivative is melamine polyphosphate with a phosphorus content of 10 wt% to 15 wt%, a moisture content of less than 0.3 wt%, and a density of 1.83 g/cm³ to 1.86 g/cm³, and a 10 wt% aqueous slurry of melamine polyphosphate (as prepared in EP1095030B1) has a pH of more than 4.5 (which is measured by a pH tester).

Further preferably, the melamine derivative is melamine polyphosphate with a phosphorus content of 12 wt% to 14 wt%, a moisture content of less than 0.3 wt%, and a density of 1.83 g/cm³ to 1.86 g/cm³, and a 10 wt% aqueous slurry of melamine polyphosphate (as prepared in EP1095030B1) has a pH of more than 5.

Further preferably, the melamine derivative is melamine polyphosphate of a 1,3,5-triazine compound, wherein the 1,3,5-triazine compound is specifically melamine, melam, melem, ammelide (melon), melamine diamide, melamine monoamide, 2-ureido melamine, acylmelamine, benzylmelamine, or diaminophenyltriazine, and a phosphorus content in the 1,3,5-triazine compound is as follows: 1.1 mol to 2.0 mol of phosphorus atoms per 1 mol of the compound, and further preferably, 1.2 mol to 1.8 mol of phosphorus atoms per 1 mol of the compound.

Preferably, in the flame retardant, a weight ratio of the phosphinate-based flame retardant to the melamine derivative is 1 : (0.05-20).

Preferably, in the flame retardant, the weight ratio of the phosphinate-based flame retardant to the melamine derivative is 1 : (0.06-0.2).

Preferably, the flame-retardant synergist is one or a combination of two or more selected from the group consisting of zinc borate, zinc stannate, zinc sulfide, and boehmite.

Preferably, the reinforcement material is one or a combination of two or more selected from the group consisting of an E glass fiber, a B glass fiber, a carbon fiber, a polyarylamide fiber, an asbestos fiber, a wollastonite fiber, a ceramic fiber, a potassium titanate whisker, a basic magnesium-sulfate whisker, a silicon carbide whisker, an aluminum borate whisker, silicon dioxide, aluminum silicate, silicon oxide, calcium carbonate, titanium dioxide, talc, wollastonite, diatomaceous earth, clay, kaolin, globular glass, mica, gypsum, iron oxide, magnesium oxide, and zinc oxide.

The low-mold deposit halogen-free flame-retardant thermoplastic polyamide composition of the present disclosure further includes a processing aid, and the processing aid is one or a combination of two or more selected from the group consisting of a heat stabilizer, a lubricant, a mold release agent, a color additive, an impact modifier, and an antioxidant.

Preferably, the lubricant is one or a combination of two or more selected from the group consisting of an ester/salt of montanic acid, a stearate, a fatty amide, a polyol, a polyol ester, and a piperidine ester. Further preferably, the lubricant is one or a combination of two or more selected from the group consisting of Licowax OP, A-C540A, EBS, TAF, PETS, and S-EED.

Preferably, the antioxidant is a complex of a hindered phenol antioxidant and a phosphite antioxidant, wherein the hindered phenol antioxidant includes, but is not limited to, antioxidant 1098, antioxidant 1010, and antioxidant 245, and the phosphite antioxidant includes, but is not limited to, antioxidant 168, antioxidant S9228, and antioxidant P-EPQ. Further preferably, the antioxidant is a mixture of antioxidant 1098 and antioxidant P-EPQ.

A preparation method of the low-mold deposit halogen-free flame-retardant thermoplastic polyamide composition is provided, including: blending, cooling, air-drying, and granulating that are achieved through a melt blending extrusion process.

Preferably, the melt blending extrusion process is specifically as follows: mixing the polyamide resin, the adsorbent, and the processing aid in a mixer, and feeding a resulting mixture into an extruder through a main feed port; feeding the reinforcement material into the extruder through a first side feed port; mixing the flame retardant and the flame-retardant synergist, and feeding a resulting mixture through a second side feed port; and conducting melt blending at 230 °C to 270 °C, cooling, air-drying, and granulating to obtain the low-mold deposit halogen-free flame-retardant thermoplastic polyamide composition.

Use of the low-mold deposit halogen-free flame-retardant thermoplastic polyamide composition in preparation of a component for an electronic device, an electrical appliance, or an electrical engineering product is provided.

Compared with the prior art, the present disclosure has the following beneficial effects:

In the low-mold deposit halogen-free flame-retardant thermoplastic polyamide composition of the present disclosure, an ethylene copolymer is added as an adsorbent and an addition amount of the ethylene copolymer is controlled, so that the prepared low-mold deposit halogen-free flame-retardant thermoplastic polyamide composition exhibits excellent flame resistance and electrical properties, and can effectively reduce the release of small molecules during injection molding, greatly reduce an amount of the mold deposit generated during injection molding, and improve the injection molding efficiency of the material and the appearance of the product. Therefore, the low-mold deposit halogen-free flame-retardant thermoplastic polyamide composition is suitable for components of electronic devices, electrical appliances, or electrical engineering products.

### DETAILED DESCRIPTION

The present disclosure will be further illustrated below with reference to specific examples, which are not intended to limit the present disclosure in any form. Unless otherwise specified, the reagents, methods, and devices used in the present disclosure are conventional reagents, methods, and devices in the prior art. Unless otherwise specified, the reagents and materials used in the present disclosure are commercially available.

The following raw materials are used in the examples of the present disclosure:
PA66 resin: PA66 EPR27, Shenma Industrial Co., Ltd.;
PA6 resin: PA6 M2800, Guangdong Xinhui Meida Nylon Co., Ltd.;
PA9T resin: Vicnyl 400, Zhuhai Vanteque Specialty Engineering Plastic Co.,Ltd.;
E glass fiber: glass fiber ECS301CL-3, Chongqing Polycomp International Co., Ltd.;
kaolin: Translink 445, BASF SE;
phosphinate-based flame retardant: aluminum diethylphosphinate, Exolit OP 1230, Clariant;
zinc phenylphosphinate: purchased from Eastar International Trading (Shanghai) Co., Ltd.;
Melamine polyphosphate: Melapur 200/70 with a phosphorus content of 12 wt% to 14 wt%, purchased from BASF SE;
flame-retardant synergist: anhydrous zinc borate, ZB-500, Kaifei Company;
adsorbent ethylene-methyl acrylate copolymer (with 75 wt% of ethylene and 25 wt% of methyl acrylate): Elvaloy^{®} AC resin 1125, purchased from DuPont, USA;
adsorbent ethylene-methyl acrylate-glycidyl methacrylate random tercopolymer (with about 70 wt% of ethylene, 20 wt% of methyl acrylate, and 10 wt% of glycidyl methacrylate): Elvaloy^{®} PTW, purchased from Du Pont, USA;
adsorbent ethylene-vinyl alcohol copolymer (with 75 wt% of ethylene and 25 wt% of vinyl alcohol): purchased from Shanghai Standard Biotech Co., Ltd.;
POE flexibilizer: Fusabond N493, DuPont;
red phosphorus: purchased from Changzhou Chuanlin Chemical Co., Ltd.;
antioxidant: Irganox@ 1098, BASF SE;
color additive aniline black: TN-870, Orient Chem. Limited, Japan; and
lubricant: A-C540A, Honeywell.

### Examples 1 to 10

In these examples, a series of low-mold deposit halogen-free flame-retardant polyamide compositions were provided.

According to the formula in Table 1, the polyamide resin, the adsorbent, and the processing aid were mixed in a mixer, and a resulting mixture was fed into an extruder through a main feed port; the reinforcement material was fed into the extruder through a first side feed port; the flame retardant and the flame-retardant synergist were mixed, and a resulting mixture was fed through a second side feed port; and the mixture was subjected to melt blending at 230 °C to 270 °C, cooling, air-drying, and granulating to give the series of low-mold deposit halogen-free flame-retardant polyamide compositions.

### Comparative Example 1

In this comparative example, a halogen-free flame-retardant polyamide composition was provided.

The halogen-free flame-retardant polyamide composition in this comparative example was prepared through the same method as that of Example 1, except that a POE flexibilizer was used instead of the adsorbent in Example 1.

### Comparative Example 2

In this comparative example, a halogen-free flame-retardant polyamide composition was provided.

The halogen-free flame-retardant polyamide composition in this comparative example was prepared through the same method as that of Example 1, except that the adsorbent was used in an amount of 0.3 part by weight.

### Comparative Example 3

In this comparative example, a halogen-free flame-retardant polyamide composition was provided.

The halogen-free flame-retardant polyamide composition in this comparative example was prepared through the same method as that of Example 1, except that the adsorbent was used in an amount of 7 parts by weight.

### Comparative Example 4

In this comparative example, a halogen-free flame-retardant polyamide composition was provided.

The halogen-free flame-retardant polyamide composition in this comparative example was prepared through the same method as that of Example 1, except that a mixture of red phosphorus and a phosphinate-based flame retardant was adopted as the flame retardant.

### Comparative Example 5

In this comparative example, a halogen-free flame-retardant polyamide composition was provided.

The halogen-free flame-retardant polyamide composition in this comparative example was prepared through the same method as that of Example 1, except that an ethylene-vinyl alcohol copolymer was adopted as the adsorbent.

**Table 1. Proportions (parts by weight) of components in each of the compositions of the examples and comparative examples**

| Raw material | | Exa mpl e 1 | Exa mpl e 2 | Exa mpl e3 | Exa mpl e 4 | Exa mpl e 5 | Exa mpl e 6 | Exa mpl | Exa mpl e8 | Ex am ple 9 | Ex am ple 10 | Co mp ara tiv e Ex am ple 1 | Co mp ara tiv e Ex am ple 2 | Com parat ive Exa mple 3 | Com para tive Exa mpl e 4 | Co mp arat ive Exa mpl e5 |
|---|---|---|---|---|---|---|---|---|---|---|---|---|---|---|---|---|
| PA | PA66 | 55.5 | - | 41 | 70 | 43 | 43 | 43 | - | 55. 5 | 55. 5 | 55. 5 | 55. 5 | 55.5 | 55.5 | 55. 5 |
| | PA6 | - | 52.5 | 20 | - | - | - | - | - | - | - | - | - | - | - | - |
| | PA9T | - | - | - | - | - | - | - | 55.5 | - | - | - | - | - | - | - |
| Fla me reta rda nt | Alumi num diethyl phosp hinate | 18 | 15 | 20 | 24 | 13 | 13 | 13 | 18 | - | 18 | 18 | 18 | 18 | 18 | 18 |
| | Zinc phenyl phosp hinate | - | - | - | - | - | - | - | - | 13 | - | - | - | - | - | - |
| | melam ine polyph osphat e | 2 | 3 | 4 | 1 | 1 | 1 | 1 | 2 | 2 | 2 | 2 | 2 | 2 | - | 2 |
| | Red phosp horns | - | - | - | - | - | - | - | - | - | - | - | - | - | 2 | - |
| Flame-retardant synergist | | 2 | 1 | 1 | 1.5 | 4 | 2 | 4 | 4 | 2 | 2 | 2 | 2 | 2 | 2 | 2 |
| Rei nfo rce me nt mat eria 1 | Glass fiber | 25 | 30 | 15 | - | 40 | 40 | 40 | 25 | - | 25 | 25 | 25 | 15 | 25 | 25 |
| | Kaolin | - | - | - | - | - | - | - | - | 25 | - | - | - | - | - | - |
| Ads orb ent | **Elvalo y^{®}** AC resin 1125 | 0.5 | 1.5 | 2 | 5 | 4 | - | - | 0.5 | 0.5 | 0.5 | - | 0.3 | 7 | 0.5 | - |
| | Elvalo y^{®} PTW | - | - | - | - | - | 4 | - | - | - | - | - | - | - | - | - |
| | Ethyle ne-vinyl alcoho 1 copoly mer | - | - | - | - | - | - | 4 | - | - | - | - | - | - | - | 0.5 |
| POE flexibilizer | | - | - | - | - | - | - | | - | - | - | 0.5 | - | - | - | - |
| Pro ces sin g aid | Antiox idant 1098 | 0.4 | 0.4 | 0.4 | 0.4 | 0.4 | 0.4 | 0.4 | 0.4 | 0.4 | - | 0.4 | 0.4 | 0.4 | 0.4 | 0.4 |
| | Anilin e black | 0.2 | 0.2 | 0.2 | 0.2 | 0.2 | 0.2 | 0.2 | 0.2 | 0.2 | - | 0.2 | 0.2 | 0.2 | 0.2 | 0.2 |
| | Lubric ant | 0.4 | 0.4 | 0.4 | 0.4 | 0.4 | 0.4 | 0.4 | 0.4 | 0.4 | - | 0.4 | 0.4 | 0.4 | 0.4 | 0.4 |

The halogen-free flame-retardant polyamide compositions of examples and comparative examples each were subjected to a property test, and specific test items and test methods were as follows:
1. Flame resistance: A 125 × 13 × 1.6 mm square board was made through injection molding, and then tested according to the ANSI/UL-94-1985 Standard.
2. Mold deposit evaluation: An injection molding machine was used to conduct injection molding 100 times continuously at injection molding temperatures of 290 °C, 285 °C, 280 °C, and 265 °C, and small-molecule substances (namely, the mold deposit) in a mold were collected and weighed (mg).

Test results were shown in Table 2.

**Table 2. Property test results of each of the compositions of the examples and comparative examples**

| Propert y | Exa mple 1 | Exa mple 2 | Exa mple3 | Exa mple 4 | Exa mple 5 | Exa mple 6 | Exa mple7 | Exa mple8 | Exa mple9 | Exa mple 10 | Com para tive Exa mple 1 | Com para tive Exa mple 2 | Com para tive Exa mple3 | Com para tive Exa mple 4 | Com para tive Exa mple 5 |
|---|---|---|---|---|---|---|---|---|---|---|---|---|---|---|---|
| Flame resistan ce UL94 | V-0 | V-0 | V-0 | V-0 | V-0 | V-0 | V-0 | V-0 | V-0 | V-0 | V-1 | V-0 | V-1 | V-0 | V-0 |
| Mold deposit (mg) | 6.5 | 6.2 | 5.9 | 5.4 | 5.3 | 5.2 | 5.3 | 6.8 | 6.7 | 6.4 | 23 | 15 | 2.0 | 9.8 | 12 |

It can be seen from the data in Tables 1 and 2 that, since the adsorbent of the present disclosure is not added in Comparative Examples 1 and 5, under the same processing conditions, mold deposit contents of the two comparative examples are 3.54 and 1.85 times a mold deposit content of Example 1; since the adsorbent is added at a small amount in Comparative Example 2, the mold deposit problem is still obvious; since a content of the adsorbent is too high in Comparative Example 3, the flame resistance is decreased; a mixture of red phosphorus and a phosphinate-based flame retardant is adopted in Comparative Example 4, the mold deposit reduction is not affected, and the flame resistance is decreased; and since the ethylene copolymer of the present disclosure is not adopted in Comparative Example 5, the mold deposit is little reduced.

Therefore, it can be seen that the low-mold deposit halogen-free flame-retardant polyamide composition prepared by adding a specific content of the adsorbent to the polyamide not only exhibits excellent flame resistance, but also can significantly inhibit the release of small-molecule substances during injection molding and significantly reduce an amount of a mold deposit generated during injection molding.

The objectives, technical solutions, and beneficial effects of the present disclosure are further described in detail in the above specific implementations. It should be understood that the above are merely specific implementations of the present disclosure, and are not intended to limit the protection scope of the present disclosure. Any modification, equivalent replacement, improvement, or the like made within the spirit and principle of the present disclosure should fall within the protection scope of the present disclosure.

## Claims

1. A low-mold deposit halogen-free flame-retardant thermoplastic polyamide composition, comprising the following components in parts by weight:
| | |
|---|---|
| thermoplastic polyamide resin | 20 to 82 parts; |
| flame retardant | 13 to 25 parts; |
| flame-retardant synergist | 1 to 5 parts; |
| reinforcement material | 5 to 50 parts; and |
| adsorbent | 0.5 to 5 parts, |
wherein, the flame retardant comprises a phosphinate-based flame retardant, and does not comprise red phosphorus; and
the adsorbent comprises an ethylene copolymer obtained through copolymerization of the following components in parts by weight:
| | |
|---|---|
| ethylene | 48 to 85 parts; |
| (methyl)acrylate with 1 to 18 carbon atoms | 10 to 35 parts; and |
| functional monomer | 0 to 15 parts, |
wherein the functional monomer is one or a combination of two or more selected from the group consisting of an epoxide, an ethylenically unsaturated monocarboxylic acid, an ethylenically unsaturated monocarboxylic anhydride, an ethylenically unsaturated dicarboxylic acid, and an ethylenically unsaturated dicarboxylic anhydride.

2. The low-mold deposit halogen-free flame-retardant thermoplastic polyamide composition according to claim 1, wherein the thermoplastic polyamide resin is one or a combination of two or more selected from the group consisting of nylon 6, nylon 66, nylon 46, nylon 6/66, nylon 610, nylon 611, nylon 612, nylon 6T, and nylon 9T.

3. The low-mold deposit halogen-free flame-retardant thermoplastic polyamide composition according to claim 1, wherein the phosphinate-based flame retardant is a phosphonate and has a structure shown as follows: 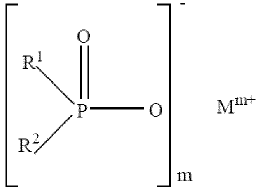 wherein R¹ and R² each are independently selected from the group consisting of linear or branched C₁-C₆ alkyl and/or aryl; M is one or a combination of two or more selected from the group consisting of an alkali metal, an alkaline-earth metal, Al, Zn, Fe, and Ti; and m is 1 to 4.

4. The low-mold deposit halogen-free flame-retardant thermoplastic polyamide composition according to claim 1, wherein the flame retardant further comprises a melamine derivative.

5. The low-mold deposit halogen-free flame-retardant thermoplastic polyamide composition according to claim 4, wherein the melamine derivative is melamine polyphosphate with a phosphorus content of 10 wt% to 15 wt%.

6. The low-mold deposit halogen-free flame-retardant thermoplastic polyamide composition according to claim 4, wherein in the flame retardant, a weight ratio of the phosphinate-based flame retardant to the melamine derivative is 1 : (0.05-20).

7. The low-mold deposit halogen-free flame-retardant thermoplastic polyamide composition according to claim 1, wherein the flame-retardant synergist is one or a combination of two or more selected from the group consisting of zinc borate, zinc stannate, zinc sulfide, and boehmite.

8. The low-mold deposit halogen-free flame-retardant thermoplastic polyamide composition according to claim 1, wherein the reinforcement material is one or a combination of two or more selected from the group consisting of an E glass fiber, a B glass fiber, a carbon fiber, a polyarylamide fiber, an asbestos fiber, a wollastonite fiber, a ceramic fiber, a potassium titanate whisker, a basic magnesium-sulfate whisker, a silicon carbide whisker, an aluminum borate whisker, silicon dioxide, aluminum silicate, silicon oxide, calcium carbonate, titanium dioxide, talc, wollastonite, diatomaceous earth, clay, kaolin, globular glass, mica, gypsum, iron oxide, magnesium oxide, and zinc oxide.

9. A preparation method of the low-mold deposit halogen-free flame-retardant thermoplastic polyamide composition according to any one of claims 1 to 8, comprising: blending, cooling, air-drying, and granulating that are achieved through a melt blending extrusion process.

10. Use of the low-mold deposit halogen-free flame-retardant thermoplastic polyamide composition according to any one of claims 1 to 8 in preparation of a component for an electronic device, an electrical appliance, or an electrical engineering product.
